(19) Europäisches Patentamt
European Patent Office
Office européen des brevets

(11) Veröffentlichungsnummer: **0 405 529 A1**

# (12) EUROPÄISCHE PATENTANMELDUNG

(21) Anmeldenummer: **90112302.6**

(51) Int. Cl.5: **G01C 19/66**

(22) Anmeldetag: **27.06.90**

(30) Priorität: **29.06.89 DE 3921424**

(43) Veröffentlichungstag der Anmeldung: **02.01.91 Patentblatt 91/01**

(84) Benannte Vertragsstaaten: **DE FR GB IT NL SE**

(71) Anmelder: **Max-Planck-Gesellschaft zur Förderung der Wissenschaften e.V.**
**Bunsenstrasse 10**
**D-3400 Göttingen(DE)**

(72) Erfinder: **Schäfer, Fritz P., Dr. Dipl.-Phys.**
**Senderstrasse 53**
**D-3400 Göttingen(DE)**

(74) Vertreter: **von Bezold, Dieter, Dr. et al**
**Dr. Dieter von Bezold Dipl.-Ing. Peter Schütz Dipl.-Ing. Wolfgang Heusler Brienner Strasse 52**
**D-8000 München 2(DE)**

## (54) Ringlaser-Kreisel.

(57) Ein Ringlaser-Kreisel mit einem optischen Resonator (12), der einen in sich geschlossenen, ringförmigen Strahlengang bildet, einem im Resonator angeordneten aktiven Lasermedium (14), das bei Anregung zwei in entgegengesetzten Richtungen im Resonator umlaufende Laserschwingungsimpulse liefert, und mit einer Vorrichtung zum Messen von Änderungen der Frequenz und/oder Wellenlänge der Laserschwingungsimpulse als Funktion einer Drehung des Resonators enthält einen im Laserresonator angeordneten sättigbaren Absorber (i6) zum Fixieren der stehenden Welle, die durch die in entgegengesetzten Richtungen umlaufenden Laserschwingungsimpulse entsteht, bezüglich des Laserresonators. Bei einer Drehung des Laserresonators ändern sich die Wellenlängen der in entgegengesetzten Richtungen umlaufenden Laserschwingungsimpulse. Die Wellenlängenänderung und/oder die Differenz der Frequenzen der Laserschwingungsimpulse sind ein Maß für die Umdrehungsgeschwindigkeit. Der "Lock-in-Effekt, der bei den bekannten Ringlaser-Kreiseln eine Messung kleiner Drehzahlen erschwert, tritt bei dem vorliegenden Ringlaser-Kreisel nicht auf.

FIG. 1

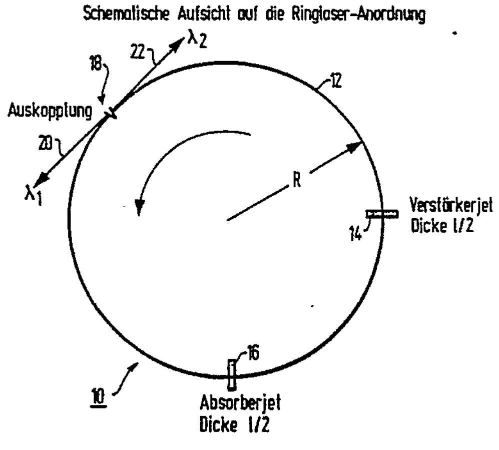


EP 0 405 529 A1

# RINGLASER-KREISEL

Die vorliegende Erfindung geht aus von einem Ringlaser-Kreisel mit den im Oberbegriff des Patentanspruchs 1 als bekannt vorausgesetzten Merkmalen.

Ein Ringlaser-Kreisel (Gyroskop) enthält einen in sich geschlossenen "ringförmigen" Strahlengang, in dem zwei Laserstrahlen in entgegengesetzten Richtungen umlaufen. Bei einem passiven Ringlaser-Kreisel werden die Laserstrahlen von einem außerhalb des ringförmigen Strahlenganges befindlichen Laser mittels eines Strahlenteilers in den Strahlengang eingekoppelt. Bei einem aktiven Ringlaser-Kreisel befindet sich ein aktives Lasermedium im ringförmigen Strahlengang und dieser arbeitet als Laser-Resonator.

Beim Laser-Kreisel wird der Sagnac-Effekt ausgenutzt, um ein Signal zu erzeugen, das der Rotationsgeschwindigkeit des Laser-Kreisels um eine Achse, die senkrecht zur Fläche des ringförmigen Strahlenganges steht und durch den Mittelpunkt dieser Fläche geht, proportional ist. Ein ausgezeichneter und umfassender Überblick über den Stand ier Laser-Kreiseltechnologie findet sich in der Veröffentlichung von Chow et al., "The ring laser gyro", Reviews of Modern Physics, Band 57, 1985, S. 61-104, von der auch im Oberbegriff des Anspruchs 1 ausgegangen wird.

Ein Hauptvorteil der seit etwa 15 Jahren bekannten Laser-Kreisel gegenüber den konventionellen elektromechanischen Kreiseln ist die wesentlich höhere Zuverlässigkeit aufgrund der Abwesenheit bewegter mechanischer Teile. Die zur Zeit mit kommerziellen Geräten erreichbare Empfindlichkeit beträgt etwa 0,01 Grad/h, was für den Flugbetrieb von Passagierflugzeugen gerade ausreichend ist. Es gibt jedoch auch eine Reihe von Anwendungen, z.B. in der Raumfahrt, wo eine um mindestens zwei Größenordnungen höhere Empfindlichkeit benötigt wird.

Einer Erhöhung der Empfindlichkeit der bekannten Laser-Kreisel steht der sog. "Lock-in"-Effekt entgegen, durch den ein Totbereich bei kleinen Rotationsgeschwindigkeiten auftritt, in dem kein Signal abgegeben wird. Zur Überwindung des "Lock-in"-Effektes ist es bei den konventionellen Laser-Kreiseln bekannt, eine mechanische Rotations-Zitterbewegung einzuführen. Hierdurch wird jedoch ein Hauptvorteil der Laser-Kreisel, nämlich das Fehlen mechanisch bewegter Teile, teilweise wieder zunichte gemacht.

Der vorliegenden Erfindung liegt, ausgehend von dem oben geschilderten Stand der Technik, die Aufgabe zugrunde, die Empfindlichkeit eines gattungsgemäßen Laser-Kreisels zu erhöhen. Diese Aufgabe wird durch die in den Ansprüchen gekennzeichnete und im folgenden näher erläuterte Erfindung gelöst.

Die vorliegende Erfindung beruht auf einem neuen Effekt, durch den eine um mehrere Größenordnungen höhere Empfindlichkeit erreicht werden kann. Ein genauer Vergleich des Sagnac-Effektes und des neuen Effektes zeigt auch, daß bei dem erfindungsgemäßen Ringlaser-Kreisel kein "Lock-in"-Effekt auftritt, wie bei den bekannten Ringlaser-Kreiseln. Wie von Schulz-Dubois (IEEE J. Quant. Electron. QE-2 (1966) (299) ausgeführt wird, kann man sich den Sagnac-Effekt anhand eines Gedanken-Experimentes folgendermaßen vorstellen: Man denke sich einen idealen zylinderischen Resonator mit kreisförmiger Boden- und Deckfläche, dessen Wände ideal leitfähig sind und daher völlig verlustfrei reflektieren. In diesem Resonator wird eine Eigenmode angeregt, die zwei gegenläufigen Wellen gleicher Frequenz entlang dem Umfang entspricht, die sich zu einer stehenden Welle entlang dem Umfang überlagern. Wird nun der Resonator um die Zylinder achse gedreht, so bleibt die stehende Welle wegen ihrer trägen Masse (gemäß der Masse-Energie-Äquivalenz) in Ruhe und gleitet völlig reibungsfrei an der Zylinder-Innenwand entlang. Durch ein kleines Auskoppelloch kann man dann die Zahl der pro Zeiteinheit vorübergleitenden Schwingungsbäuche zählen und so die Rotationgeschwindigkeit messen. Wenn sich nun irgendwo an der Zylinder-Innenwand ein sreuendes Teilchen befindet, so wird durch dieses ein entsprechend der Größe der Streuung sehr kleiner Teil der den Streuteilchen entgegenlaufenden Welle zurückgestreut und phasenrichtig der mitlaufenden Welle überlagert. Das bedeutet, daß die stehende Welle nicht mehr in Ruhe ist, sondern sich mit einer geringen Anfangsgeschwindigkeit in Richtung der Bewegung der Innenwand selbst in Bewegung gesetzt hat. Wegen der andauernden Wirkung des Streuteilchens wird die Rotationsgeschwindigkeit der stehenden Welle solange anwachsen, bis sie sich der des Zylinders exakt angeglichen hat. Da nun die Rotationsgeschwindigkeit von Welle und Zylinder gleich ist, wird das oben erwähnte Zählsignal (Wellenbäuche pro Sekunde) auf Null absinken. Dies ist der störende "Lock-in"-Effekt, der bewirkt, daß bei kleinen Rotationsgeschwindigkeiten ein Totbereich auftritt, bei dem kein Signal erzeugt wird, und der auch durch extreme Streuarmut des Spiegels nie ganz verhindert werden kann.

Während nun bei den konventionellen Laser-Kreiseln, die den Sagnac-Effekt ausnutzen, möglichst vermieden werden soll, daß sich die stehende Welle (z.B. durch die Wirkung eines Streuteilchens) an die Wand des Resonators "anheftet", um den "Lock-in"-Effekt zu vermeiden, wird bei dem erfindungsgemäßen Laser-Kreisel, der nach dem neuen Effekt arbeitet, durch die Einführung des sättigbaren Absorbers oder eines in dieser Hinsicht wirkungsgleichen Elements gerade ein solches "Anheften" der stehenden Welle an den Resonator erzwungen. Dadurch fällt natürlich auch das Sagnac-Signal fort. Jetzt wird aber ein Signal dadurch erzeugt, daß Dispersion im Resonator vorhanden ist (nämlich mindestens durch das aktive Lasermedium und den sättigbaren Absorber und/oder andere optische Elemente, wie Prismen etc.), so daß sich die beiden gegenläufigen Impulse mit ihrer Mittenfrequenz so einschwingen können, daß durch die entgegengesetzte Wirkung der Dispersion bei den verschiedenen Wellenlängen die Umlaufzeiten der beiden Impulse gerade wieder gleich sind und sie sich wieder im sättigbaren Absorber oder dergl. zu einer stehenden Welle überlagern, die am Resonator "festgeheftet" ist. Es ist einleuchtend, daß dieses Einschwingen auf die verschobenen Wellenlängen eine gewisse Zeit braucht. Wird der Resonator zu schnell drehbeschleunigt, so wird es den Impulsen, die möglichst kurz, auf alle Fälle wesentlich kürzer als der Resonatorumfang sein sollen, unmöglich gemacht, sich im sättigbaren Absorber zu treffen. Die Verlustrate wird dann zu hoch, die Laser-Emission reißt ab und das Signal geht auf Null. Während also beim Sagnac-Effekt ein Totbereich bei kleinen Rotationsgeschwindigkeiten auftritt, ist der vorliegende Laser-Kreisel, der den neuen Effekt ausnutzt, durch eine vorgegebene maximale Rotationsbeschleunigung begrenzt.

Im folgenden wird die Erfindung unter Bezugnahme auf die Zeichnungen näher erläutert. Es zeigen:

Fig. 1 eine stark vereinfachte Prinzipdarstellung des erfindungsgemäßen Laser-Kreisels, und

Fig. 2 eine schematische Darstellung einer bevorzugten Ausführungsform des erfindungsgemäßen Laser-Kreisels.

Fig. 1 zeigt eine stark vereinfachte und idealisierte Prinzip-Darstellung des erfindungsgemäßen Laser-Kreisels. Der Laser-Kreisel 10 enthält einen als Kreis mit dem Radius R dargestellten Laser-Ringresonator 12, der ein aktives Verstärkermedium ("Lasermedium") 14, dessen Dicke $\ell/2$ beträgt, und im Abstand von 1/4 des Umfanges des Ringresonators ein sättigbares Absorbermedium 16, das ebenfalls die Dicke $\ell/2$ hat, enthält. Zur Erläuterung sei zunächst angenommen, daß es sich beim Lasermedium 14 um einen Freistrahl einer Lösung von Rhodamin 6G in Ethylenglykol handelt und bei dem Absorbermedium ebenfalls um einen Freistrahl, der eine Lösung von 3,3-Diethyloxadicarbocyaninjodid in Ethylenglykol enthält. Es ist des Fachmann gut bekannt, daß eine solche Anordnung, wenn das Lasermedium beispielsweise durch einen kontinuierlichen Argonionen-Laser angeregt wird, als phasengekoppelter Laser arbeitet, bei dem im Resonator 12 gegenläufig zwei kurze Impulse umlaufen, die sich jeweils im Absorbermedium 16 treffen, weil auf diese Art und Weise die Impulse mit minimalem Energieverlust das sättigbare Absorbermedium 16 durchlaufen können. Jeder Impuls muß in diesem Falle ja nur jeweils die Hälfte der zur Ausbleichung der Absorption nötigen Energie liefern, während ein einzelner Impuls, wenn er alleine durch das Absorbermedium hindurchliefe, die gesamte Energie aufbringen müßte, was bedeutet, daß die Gesamtanordnung wesentlich höhere Verluste hätte. Selbstverständlich schwingt der Ringlaser in der eben beschriebenen Weise so an, daß die beiden Impulse stets im sättigbaren Absorbermedium überlagern und dort eine stehende Welle bilden. Wenn einer der nicht dargestellten Resonatorspiegel leicht transparent ist, so werden durch diesen Spiegel, der in Fig. 1 nur schematisch bei 18 angedeutet ist, jeweils Bruchteile der beiden umlaufenden Impulse in räumlich getrennten Richtungen 20, 22 ausgekoppelt und können außerhalb des Resonators nachgewiesen werden. Insbesondere können die be den ausgekoppelten Pulse so umgelenkt werden, daß sie zum gleichen Zeitpunkt auf der Kathode eines Photomultipliers oder eines ähnlichen Photodetektors eintreffen, wo wegen der nichtlinearen, insbesondere quadratischen Abhängigkeit des Photostromes von der optischen Feldstärke der einlaufenden Wellen bei evtl. vorhandener Frequenzdifferenz der beiden Impulse eine Schwebungsfrequenz auftritt, die gemessen werden kann. Bei nichtrotierendem Ringlaser kann keine Frequenzdifferenz eintreten, da der Laser seine Frequenz automatisch auf das Minimum der Resonatorverluste einstellt. Wenn jedoch der Ringlaser-Resonator mit einer Winkelgeschwindigkeit$\Omega$ (Radian$\cdot s^{-1}$) rotiert, also die Umfangsgeschwindigkeit $v_r = \Omega \cdot R$ ist, werden im Ringresonator in den gegenläufigen Richtungen Schwingungen verschiedener Wellenlängen $\lambda_1$ und $\lambda_2$ erzeugt und in den beiden Auskoppelrichtungen 20, 22 ausgekoppelt, so daß am Photodetektor zwei Frequenzen $\nu_1$ und $\nu_2$ auftreten, die eine entsprechende Schwingungsfrequenz erzeugen. Der Grund dafür, daß unterschiedliche Wellenlängen auftreten, ist, daß bei der beispielsweise dargestellten Drehung des Lasers im Gegenuhrzeigersinn der mitlaufende Impuls schneller, der entgegengesetzt laufende Impulse aber langsamer als im ruhenden Laser laufen muß, damit sich die beiden Impulse stets im sättigbaren Absorber 16 überlagern können, wie es für die richtige Funktion eines solchen Ringlasers erforderlich ist. Es muß hierfür die Umfangsgeschwindigkeit $v_r$ gerade gleich der Differenz der Gruppengeschwindigkeit $c_1$, $c_2$ der beiden gegenläufigen Impulse sein, also $v_r = \Delta c_g = c_1 - c_2$. Da aber die Gruppengeschwindigkeit nur in Materie ausreichender Dichte, d.h. hier nur im Lasermedium 14 und im Absorber 16, die zusammen die Dicke $\ell$ haben, nennenswert unterschiedlich sein kann, ist die effektive Gruppengeschwindigkeit $c_g$

$$c_g = c_0 - c_0 \frac{\ell(n+dn/d\nu-1)}{2\pi R}.$$

wobei $c_0$ die Vakuumlichtgeschwindigkeit,
n der effektive Brechungsindex im Lasermedium 14 und Absorber 16, und
$\nu$ die Laserstrahlungsfrequenz
sind.

Die effektive Gruppengeschwindigkeit läßt sich wie folgt herleiten:

$$c_g = \frac{2\pi R}{\frac{2\pi R-\ell}{c_0} + \ell\cdot\frac{n+\nu\cdot dn/d\nu}{c_0}} = \frac{c_0\cdot 2\pi R}{2\pi R + \ell(n+\nu\cdot dn/d\nu-1)}$$

$$= \frac{c_0}{1 + \ell(n+\nu\cdot dn/d\nu-1)/2\pi R} \approx c_0\left(1 - \frac{\ell(n+\nu\cdot dn/d\nu-1)}{2\pi R}\right).$$

$$\text{Also ist } \Delta c_g = \frac{c_0\cdot\ell}{2\pi R}(\Delta n+\Delta(\nu\cdot dn/d\nu)).$$

$$\text{Mit } v_r = \Delta c_g \rightarrow \Omega\cdot R = \frac{c_0\cdot\ell}{2\pi R}\underbrace{(\Delta n+\Delta(\nu\cdot dn/d\nu))}_{=:\,\Delta n_g(\nu)}$$

Die Abhängigkeit des "effektiven Brechungsindex" $n_g$ als Funktion von $\nu$ ist bekannt, ebenso dann auch $dn_g/d\nu$, die Steigung der betreffenden Funktion.

Die Differenz der Schwingungsfrequenzen der in entgegengesetzten Richtungen umlaufenden Laserstrahlungsimpulse ist

$$\Delta\nu = \Delta n_g/(dn_g/d\nu)\text{, also}$$

$$\Delta\nu = \frac{2\cdot\Omega\cdot\pi R^2}{c_0\cdot\ell\cdot dn_g/d\nu} \quad \text{oder mit der Ringfläche } A = \pi R^2\text{:}$$

$$\Delta\nu = \frac{2\cdot\Omega\cdot A}{c_0\cdot\ell\cdot dn_g/d\nu}$$

Zum Vergleich: Beim Sagnac-Effekt ist $\Delta\nu = 2\cdot\nu\cdot\Omega R/c_0$. Generalisiert für eine Fläche A beliebiger Form ist $\Delta\nu = 4\ \Omega A/(P\cdot\lambda)$, wobei, P die Länge des durch den Ringresonator gebildeten Srahlenganges ist, siehe W.W. Chow et al., ibid.

Ein Vergleich der Skalenfaktoren des Sagnac-Effektes für einen Ringresonator mit dem Umfang $2\pi R$ ergibt:

$$f = \frac{\Delta\nu_n}{\Delta\nu_s} = \frac{P\cdot\lambda}{c_0\cdot\ell\cdot(dn_g/d\nu)\cdot 2} = \frac{1}{\nu}\cdot\frac{\pi R}{\ell\cdot dn_g/d\nu}$$

Zahlenbeispiel: $\lambda$ = 600 nm → $\nu$ = $5\cdot10^{14}$ Hz; R = 0,5 m, $\ell$ = 60 µm, $dn_g/d\nu \approx dn/d\nu = 4\cdot10^{-17}$ s (für Quarzglas bei 600 nm):

$$f \approx \frac{1}{5\cdot10^{14}\ \text{Hz}}\cdot\frac{\pi\cdot 0{,}5\ \text{m}}{6\cdot10^{-5}\ \text{m}\cdot4\cdot10^{-17}\ \text{s}} \approx 10^6\ (!)$$

Das heißt, der neue Effekt ist ceteris paribus sechs Größenordnungen empfindlicher!

**Zahlenbeispiele für Absolutwerte von $\Delta\nu$**

1. Beispiel: R = 0,5 m, $\Omega = 2\pi s^{-1}$, $\nu = 5\cdot10^{14}$ Hz (600 nm)
   a) Sagnac-Effekt:
   $\Delta\nu = 2\cdot\nu\cdot\Omega\cdot R/c_0 = 2\cdot5\cdot10^{14}\cdot3/3\cdot10^8$ = $10^7$ Hz
   b) Neuer Effekt:

$$\Delta\nu = 2\Omega\pi R^2/(c_0\cdot\ell\cdot dn_g/d\nu)$$

mit $\ell$ = 60 µm, $dn_g/d\nu \approx dn/d\nu = 4\cdot10^{-17}$ s

bei Quarzglas bei 600 nm

$$= \frac{2\pi R^2\cdot\Omega}{c_0\cdot\ell\cdot dn/d\nu} = \frac{3\cdot3}{3\cdot10^8\cdot6\cdot10^{-5}\cdot4\cdot10^{-17}} = 1{,}25\cdot10^{13}\ \text{Hz}\ (!)$$

$$(\nu/\Delta\nu = 40(!))$$

2. Beispiel: Ringlaser auf rotierender Erde, alles wie oben, aber bei 50° geographischer Breite:

$$\Omega = \frac{2\pi\sin 50^\circ}{86400} = 5{,}6\cdot10^{-5}\ s^{-1}$$

   a) Sagnac-Effekt: $\Delta\nu = 10^7\ \text{Hz}\cdot5{,}6\cdot10^{-5}/2\pi \approx$ 88,6 Hz
   b) Neuer Effekt: $\Delta\nu = 1{,}25\cdot10^{13}\ \text{Hz}\cdot5\cdot6\cdot10^{-5}/2\pi \approx 1{,}1\cdot10^8$ Hz
   ($\nu/\Delta\nu = 4{,}5\cdot10^6$)

3. Beispiel: Für Raumfahrzeuge und U-Boote wird eine Auflösung von $10^{-4}$ Grad/h und Stabilität von $10^{-5}$ Grad/h gefordert (ein bis zwei Größenordnungen besser als z.Zt. mit Laser-Kreiseln (oder mechanischen Kreiseln) möglich; siehe W.w. Chow et al., ibid).
   → $\Omega = (10^{-4}\cdot\pi/180)/3600\ s^{-1} = 4{,}8\cdot10^{-10}\ s^{-1}$
   a) Sagnac-Effekt: $\Delta\nu = 10^7\ \text{Hz}\cdot4{,}8\cdot10^{-10}/2\pi = 7{,}7\cdot10^{-4}$ Hz
   b) Neuer Effekt: $\Delta\nu = 1{,}25\cdot10^{-13}\ \text{Hz}\cdot4{,}8\cdot10^{-10}/2\pi$ = 950 Hz

Aus diesen Zahlenbeispielen ist klar ersichtlich, daß mit dem Ringlaser-Kreisel, der den neuen Effekt ausnutzt, die bisher nicht erreichbare, aber für einige Anwendungen notwendige Empfindlichkeit bequem erzielt werden kann. Die Detektion der Frequenz- oder Wellenlängenverschiebungen kann auf verschiedene Art und Weise erfolgen. Im Falle hoher Rotationsgeschwindigkeiten werden die Differenzfrequenzen unbequem hoch und nur mit großem technischen Aufwand meßbar. Dagegen lassen sich in diesem Falle bequem Wellenlängen-Meßgeräte einsetzen, wie sie in der Lasertechnik als sog. Wavemeter bekannt sind, z.B. von einem Typ, in dem drei Fabry-Perots oder Fizeau-Interferometer benutzt werden, um die Wellenlänge auch von gepulster Laserstrahlung feststellen zu können. Wegen der Kürze der Impulse ergeben sich zwar sehr breite Ringe bzw. Streifen, jedoch kann man wegen der hohen Impulsfolgefrequenz (typischerweise 60 - 100 MHz) durch Mittelung über viele Impulse die genaue Mittellage der Streifen sicher auf 1/100 oder besser bestimmen.

Für geringere Rotationsgeschwindigkeiten lassen sich die üblichen Zählmethoden der Frequenzdifferenz anwenden, wobei ein Phase-locked-Loop zwischen den einzelnen Impulsen interpolieren kann. In einem Zwischenbereich können beide Methoden, nämlich Frequenz- und Wellenlängenmessung gleichzeitig benutzt werden. Bei sehr geringen Rotationsgeschwindigkeiten, wo $\Delta\lambda / \lambda \leqq 10^{-6}$ ist, läßt sich nur die Frequenzzählmethode bequem anwenden.

Da sich der große Skalenfaktor des neuen Effektes gegenüber dem Sagnac-Effekt hauptsächlich aus der Kleinheit von $\ell$, d.h. der optischen Weglänge in den dispersiven Elementen im Resonator-Strahlengang, im Vergleich zu R, d.h. der optischen Umfangslänge des Resonators, und von $dn/d\nu$ im Vergleich zu n/v herleitet, sollten diese beide Werte wegen ihrer Temperaturabhängigkeiten einer Temperaturstabilisierung im mK-Bereich unterworfen werden, wenn das volle Empfindlichkeitspotential des neuen Effektes ausgenutzt werden soll. Das beinhaltet gleichzeitig eine sehr gute Stabilisierung der Pumplaserleistung, da ein Teil derselben im Verstärker und im Absorber in Wärme umgesetzt wird.

Die Verwendung eines Farbstofflasers und eines Absorbers mit Flüssigkeits-Freistrahl erfordert eine sehr gute Isolation gegen akustische und andere mechanische Störungen, um $\ell$ durch diese nicht zu verändern. Für Fälle, wo solche Störungen unvermeidbar sind, ist es zweckmäßig, Festkörperlaser zu benutzen, z.B. Farbzentrenlaser statt Farbstofflaser und Kristalle mit Farbzentren geeigneter Art als sättigbare Absorber. Der Farbzentrenlaser selbst kann durch Laserdioden gepumpt werden, so daß insgesamt nur Festkörpermaterialien als aktive und passive Bauelemente eingesetzt werden. Selbstverständlich lassen sich auch noch andere Laser- und Absorbermaterialien von genügender Bandbreite einsetzen, und es dürfte dem Fachmann nicht schwerfallen, nach den obigen Beschreibungen und den bekannten Anforderungen an phasengekoppelte Ringlaser mit gegenläufigen Impulsen entsprechende Kombinationen von Laser- und Absorbermaterialien zusammenzustellen.

Fig. 2 zeigt schematisch einen Ringlaser-Kreisel 100 gemäß einer praktischen Ausführungsform der Erfindung. Der Ringlaser-Kreisel gemäß Fig. 2 enthält einen Ringresonator 112, der durch vier Spiegel 112a, 112b, 112c und 112d gebildet wird. Die Spiegel 112a bis 112c reflektieren die Laserstrahlung möglichst vollständig, der Spiegel 112d hat eine geringe Transparenz, z.B. einige Prozent. In der Mitte zwischen den Spiegeln 112d, 112c ist ein aktives Farbzentren-Lasermedium 114 angeordnet, das eine Dicke von etwa 40 µm hat. In der Mitte zwischen den Spiegeln 112c und ii2d ist ein etwa 40 µm dicker Kristall mit Farbzentren geeigneter Art als sättigbarer Absorber 116 angeordnet. Das Farbzentren-Lasermedium wird durch eine Pumpstrahlungsquelle 130 optisch gepumpt, welche eine Laserdiode enthält. Außer dem Lasermedium 114 und dem Absorber 116 enthält der Strahlengang des Ringresonators keine dispersiven optischen Elemente.

Die durch den teildurchlässigen Spiegel 112d ausgekoppelten Teile 120, 122 der gegenläufig umlaufenden Laserstrahlungsimpulse werden in einer Detektoranordnung 132 verarbeitet. Die Detektoranordnung enthält einen möglichst vollständig reflektierenden Spiegel i34 und zwei halbdurchlässige Spiegel 136, 138, die, wie dargestellt so angeordnet sind, daß die beiden ausgekoppelten Laserstrahlen kombiniert werden und auf einen Photodetektor 140 fallen, z.B. einen Sekundärelektronenvervielfacher, wo sie interferieren und eine Schwebung erzeugen, deren Frequenz der Differenz der Schwingungsfrequenzen der ausgekoppelten Laserstrahlungsimpulse entspricht.

Der Teil der ausgekoppelten Strahlung 122, der vom halbdurchlässigen Spiegel 138 durchgelassen wird, fällt auf eine Wellenlängenmeßvorrichtung 142 des oben erwähnten Typs, die ein der Wellenlänge der in der einen Richtung umlaufenden Laserstrahlung entsprechenden elektrisches Ausgangssignal liefert.

Die oben beschriebenen Beispiele lassen sich selbstverständlich in der verschiedensten Weise abwandeln, ohne den Rahmen der Erfindung zu überschreiten. Im allgemeinen sollte jedoch die in Richtung des Laserresonator-Strahlenganges gemessene Dicke aller im Strahlengang enthaltenen dispersiven Elemente, also insbesondere des sättigbaren Absorbers oder der wirkungsgleichen Einrichtung, klein im Vergleich zum Umfang des Laseresonators sein. Dasselbe gilt vorzugsweise auch für die Dicke des aktiven Lasermediums. Auch sollen die Laserstrahlungsimpulse kurz im Vergleich zum Umfang des Laserresonators sein.

Bewährt haben sich die folgenden Werte: Umfang des Laserresonators 100-200 cm; Dicke des sättigbaren Absorbers sowie des Lasermediums jeweils 10-100 µm; Impulsdauer möglichst kurz, z.B. in der Größenordnung von wenigen Nanosekunden bis herunter in den Sub-Pikosekundenbereich.

## Ansprüche

1. Ringlaser-Kreisel mit einem optischen Resonator (112), der einen in sich geschlossenen, ringförmigen Strahlengang bildet, ferner mit einer einen Laser (114, 130) enthaltenden Anordnung zum Erzeugen zweier in entgegengesetzten Richtungen im Resonator (112) umlaufender Laserschwingungsimpulse, und mit einer Vorrichtung (132) zum Messen von Änderungen der Frequenz und/oder Wellenlänge der Laserschwingungsimpulse als Funktion einer Drehung des Resonators (112), **gekennzeichnet durch** eine im Resonator (112) angeordnete Vorrichtung 116) zum Fixieren der stehenden Welle, die durch die in entgegengesetzten Richtungen umlaufenden Laserschwingungsimpulse entsteht, bezüglich des Laserresonators (112).

2. Ringlaser-Kreisel nach Anspruch 1, **dadurch gekennzeichnet**, daß die Fixierungsvorrichtung (116) ein dispersives kondensiertes Medium enthält.

3. Ringlaser-Kreisel nach Anspruch 1, **dadurch gekennzeichnet**, daß die Fixierungsvorrichtung einen sättigbaren Absorber enthält.

4. Ringlaser-Kreisel nach einem der Ansprüche 1 bis 3, **dadurch gekennzeichnet**, daß die Laseranordnung ein im Laserresonator angeordnetes aktives Lasermedium (114) enthält.

5. Ringlaser-Kreisel nach einem der vorhergehenden Ansprüche, **dadurch gekennzeichnet**, daß die optische Weglänge in der Fixierungsvorrichtung (116) klein im Vergleich zur Länge des ringförmigen Strahlenganges des Resonators ist.

6. Ringlaser-Kreisel nach einem der vorhergehenden Ansprüche, **dadurch gekennzeichnet**, daß die Länge der Laserschwingungsimpulse klein im Vergleich zur Länge des ringförmigen Strahlenganges des Resonators ist.

7. Ringlaser-Kreisel nach einem der vorhergehenden Ansprüche, **gekennzeichnet durch** eine Vorrichtung zur Temperaturstabilisierung des Laserresonators (112) und der in ihm enthaltenen dispersiven Elemente (114, 116).

8. Ringlaser-Kreisel nach einem der vorhergehenden Ansprüche, **dadurch gekennzeichnet**, daß das im optischen Resonator (12) angeordnete aktive Lasermedium (114) und die Fixierungsvorrichtung (116) Festkörperelemente sind.

9. Ringlaser-Kreisel nach einem der vorhergehenden Ansprüche, **dadurch gekennzeichnet**, daß der Strahlengang des Laser-Resonators außer der Fixierungsvorrichtung (116) und dem aktiven Lasermedium keine weiteren dispersiven Elemente enthält.

FIG. 1

Schematische Aufsicht auf die Ringlaser-Anordnung

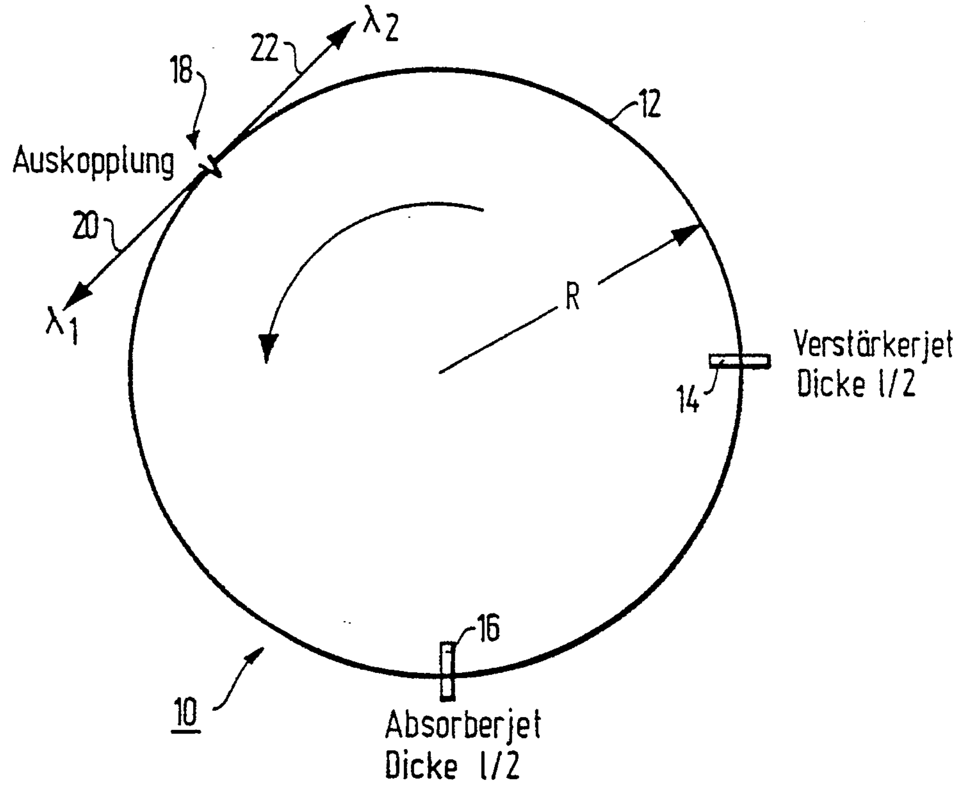

FIG. 2

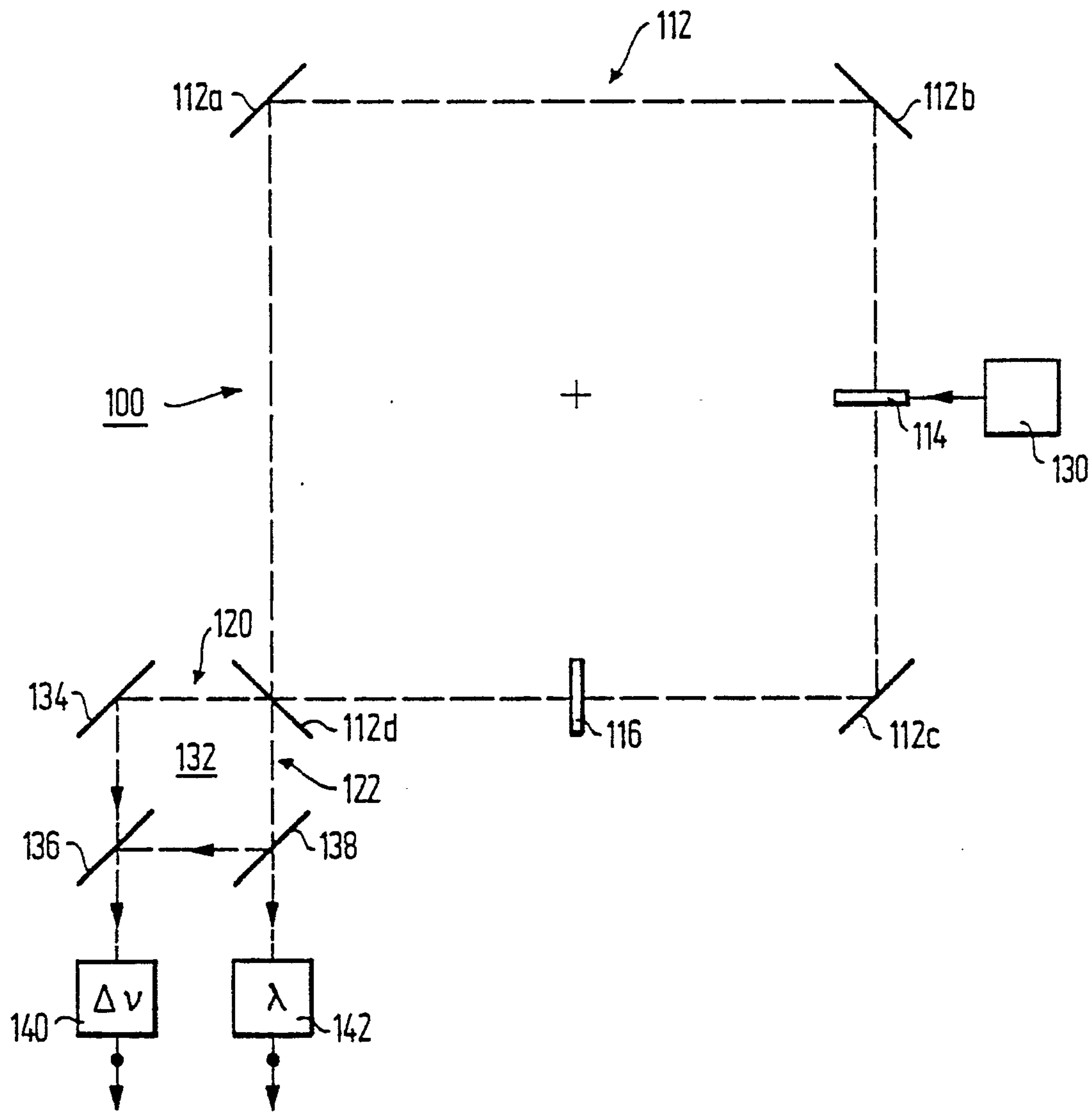
112
112a
112b
100
114
130
120
134
112d
116
112c
132
122
136
138
Δν
λ
140
142

Europäisches Patentamt

# EUROPÄISCHER RECHERCHENBERICHT

Nummer der Anmeldung

EP 90 11 2302

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 358 038 (GEC)<br>* Ganzes Dokument *<br>--- | 1,4-6,8,9 | G 01 C 19/66 |
| X | IEEE JOURNAL OF QUANTUM ELECTRONICS, Band QE-3, Nr. 11, November 1967, Seiten 454-459; N. BUHOLZ et al.: "3.2 - Acoustic wave amplitude modulation of a multimode ring laser"<br>* Ganzes Dokument *<br>--- | 1,4-6,9 | |
| P,X | OPTICS LETTERS, Band 14, Nr. 18, 15. September 1989, Seiten 990-992; J. CHESNOY: "Picosecond gyrolaser"<br>* Ganzes Dokument *<br>--- | 1,4-6,9 | |
| A | OPTICS LETTERS, Band 6, Nr. 5, Mai 1981, Seiten 219-221; J.C. DIELS et al.: "Influence of wave-front-conjugated coupling on the operation of a laser gyro"<br>* Ganzes Dokument *<br>--- | 1 | RECHERCHIERTE SACHGEBIETE (Int. Cl.5) |
| A | OPTICS LETTERS, Band 6, Nr. 12, December 1981, Seiten 590-592; A. KAPLAN et al.: "Enhancement of the Sagnac effect due to nonlinearly induced nonreciprocity"<br>* Ganzes dokument *<br>----- | 1 | G 01 C<br>H 01 S |

Der vorliegende Recherchenbericht wurde für alle Patentansprüche erstellt

| Recherchenort | Abschlußdatum der Recherche | Prüfer |
|---|---|---|
| DEN HAAG | 24-09-1990 | KOLBE W.H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)